# EUROPEAN PATENT APPLICATION

(11) **EP 1 775 323 A1**
(43) Date of publication of application: **18.04.2007**
(21) Application number: 05766374.2
(22) Date of filing: 15.07.2005
(51) Int. Cl.: C08L 101/00, C08L 51/08

(54) **THERMOPLASTIC RESIN COMPOSITION EXCELLING IN TRANSPARENCY AND MOLD RELEASE PROPERTY**

(30) Priority: 28.07.2004 JP 2004220196
(71) Applicant: Kaneka Corporation, Kita-ku Osaka-shi, Osaka 530-8288 (JP)
(72) Inventor: SHIBATA, Takao, 6700954 (JP); TAKAKI, Akira, Hyogo 657-0068 (JP)
(74) Representative: Vossius & Partner
(86) International application number: PCT/JP2005/013172
(87) International publication number: WO 2006/011385

(57) **Abstract**

The invention provides a polyorganosiloxane-containing copolymer of high transparency that excels in powder characteristics and that when added in a small amount to a thermoplastic resin, ensures excellent mold release ability at molding thereof, and a thermoplastic resin composition comprising the same. The present invention can solve the above-mentioned problem by providing the thermoplastic resin composition comprising 0.01 to 3 % by weight of a polyorganosiloxane-containing graft copolymer (C) with 99.99 to 97 % by weight of thermoplastic resin (D), wherein the polyorganosiloxane-containing graft copolymer (C) is obtainable by polymerizing 40 to 10 parts by weight of a vinyl monomer (B) in the presence of 60 to 90 parts by weight of a polyorganosiloxane (A) with a proviso that a sum of (A) and (B) is 100 parts by weight, the polyorganosiloxane (A) is obtainable by polymerizing 99.99 to 99.6 parts by weight of the sum of an organosiloxane having cyclic structure and an alkoxysilane with 0.01 to 0.4 % by weight of graft crosslinking agent, and a weight ratio of the organosiloxane having cyclic structure to the alkoxysilane is 1/9 to 9/1.

## Description

### FIELD OF THE INVENTION

The present invention relates to a polyorganosiloxane-containing graft copolymer excellent in powder characteristics and transparency which could (may) improve mold release ability of a thermoplastic resin and a thermoplastic resin composition containing a small amount of the copolymer.

### BACKGROUND ART

Since thermoplastic resins excellent in transparency lack in flexibility, it is difficult, for example, to release a molded product from a mold after injection molding and in an extreme case, the product may be broken at the time of release it from the mold. Conventionally, as a method for improving the release ability of these thermoplastic resins has been generally employed a method of adding a lubricant such as a fatty acid or its metal salt, wax, or a higher alcohol, a release agent such as silicone oil, or the like to the resins (e.g., refer to Non-Patent Document 1).

However, a method of adding a lubricant is insufficient to provide the release ability in the case of a molded product with a complicated shape and sometimes requires to limit the shape of a molded product or to take countermeasure in terms of the molding conditions, for example, prolongation of cooling time. Further, in the case a large quantity of the lubricant is added, the mechanical properties may be deteriorated or in the case of high temperature molding, appearance defects may be caused due to decomposition gas emission or the mold release effect may be decreased due to decomposition of added components. Further, with respect to a method of adding silicone oil, although the mold release improvement effect can be expected, however the transparency of the molded product is significantly decreased.
Non-Patent Document 1: "Polycarbonate resin Handbook (Handbook of Polycarbonate Resins)", edited by Seiichi HONMA, Nikkan Kogyo Shimbun Co., Ltd., Aug. 28, 1992, p. 155-156

### DISCLOSURE OF THE INVENTION

### Problem to be Solved by the Invention

The present invention aims to solve the above-mentioned problems and provides a thermoplastic resin composition excellent in the mold release ability at the time of molding processing and excellent in the transparency in form of a molded product.

### Means for Solving the Problems

The inventors have conducted extensive studies in order to solve the above-described problems, and found that a specific polyorganosiloxane-containing graft copolymer is excellent in powder characteristics and is considerably improving the mold release ability without deteriorating the transparency in the case a small amount of the polyorganosiloxane-containing graft copolymer is added to a thermoplastic resin. These findings have led to completion of the present invention.

That is, the present invention provides a thermoplastic resin composition comprises 0.01 to 3 % by weight of a polyorganosiloxane-containing graft copolymer (C) and 99.99 to 97% by weight of a thermoplastic resin (D), wherein the polyorganosiloxane-containing graft copolymer (C) is obtainable by polymerizing 40 to 10 parts by weight of a vinyl monomer (B) in the presence of 60 to 90 parts by weight of a polyorganosiloxane (A) with a proviso that a sum of (A) and (B) is 100 parts by weight, the polyorganosiloxane (A) is obtainable by polymerizing 99.99 to 99. 6% by weight of a sum of an organosiloxane having cyclic structure and an alkoxysilane with 0.01 to 0.4% by weight of a graft crosslinking agent, a weight ratio of the organosiloxane having cyclic structure to the alkoxysilane is 1/9 to 9/1 (claim 1).

The present invention relates the thermoplastic resin composition according to claim 1, wherein the vinyl monomer (B) is at least one selected from the group consisting of aromatic vinyl monomer, vinyl monomer cyanide, (meth)acrylic acid ester monomer, carboxyl group-containing vinyl monomer, and maleimide monomer (claim 2).

### Effects of the Invention

The polyorganosiloxane-containing graft copolymer of the present invention is excellent in powder characteristics and the resin composition obtained by blending a small amount of the polyorganosiloxan-containing graft copolymer with a thermoplastic resin is excellent in the mold release ability at the time of molding processing and excellent in transparency in form of a molded product.

### BEST MODE FOR CARRYING OUT OF THE INVENTION

A polyorganosiloxane-containing graft copolymer (C) of the present invention is obtained by polymerizing 40 to 10 parts by weight of a vinyl monomer (B) in the presence of 60 to 90 parts by weight of a polyorganosiloxane (A) (the sum of (A) and (B) is 100 part by weight). The polyorganosiloxane (A) concerning the polyorganosiloxane-containing graft copolymer (C) of the present invention is obtainable by polymerizing an organosiloxane having cyclic structure and an alkoxysilane used in a weight ratio of the organosiloxane having cyclic structure to the alkoxysilane of 1/9 to 9/1.

The above-mentioned organosiloxane havnig cyclic structure is a compound having a structure of which the siloxane bonds form a cyclic structure. As specific examples of the organosiloxane having cyclic structure, there may be mentioned hexamethylcyclotrisiloxane (D3), octamethylcyclotetrasiloxane (D4), decamethylcyclopentasiloxane (D5), and dodecamethylcyclohexasiloxane (D6). Among them, octamethylcyclotetrasiloxane is preferable in terms of availability. The above-mentioned organosiloxanes having cyclic structure may be used alone or in combination of two or more of them.

The above-mentioned alkoxysilane is a compound having a structure in which a hydrolyzable silicon group is bonded to silicon atom. As examples of the hydrolyzable silicon group, there may be mentioned halogen, alkoxy group and hydroxyl group and the like. A compound containing an alkoxy group in a polysiloxane is also included in the alkoxysilane of the present invention. As specific examples of alkoxysilane, there may be mentioned diphenyldimethoxysilane, diphenyldiethoxysilane and the like. Among them, diphenyldimethoxysilane is particularly preferable. One or more kinds of these alkoxysilanes may be used alone or in combination. The compounds of which the hydrolyzable silicon group is bonded are sometimes used as a graft crosslinking agent, which will be described later, and in such a case, compounds containing the hydrolyzable silicon group in the molecule and no polymerizable double bond may be classified in the alkoxysilane.

The weight ratio of the organosiloxane having cyclic structure to the alkoxysilane is 1/9 to 9/1, preferably 3/7 to 8/2, and more preferably 4/6 to 8/2. If the above-mentioned weight ratio of the organosiloxane having cyclic structure is less than 1, the polymerization may become unstable and it tends to be difficult to obtain polyorganosiloxane and if the above-mentioned weight ratio of the organosiloxane having cyclic structure exceeds 9, transparency of the molded product of the thermoplastic resin composition obtained finally tends to be decreased.

The polyorganosiloxane (A) concerning the polyorganosiloxane-containing graft copolymer (C) of the present invention is obtained by polymerizing 99.99 to 99.6% by weight of the sum of the organosiloxane having cyclic structure and the alkoxysilane with 0.01 to 0.4% by weight of a graft crosslinking agent.

Examples of the graft crosslinking agent to be used in the present invention may include p-vinylphenylmethyldimethoxysilane, p-vinylphenylethyldimethoxysilane, 2-(p-vinylphenyl)ethylmethyldimethoxysilane, 3-(p-vinylbenzoyloxy)propylmethyldimethoxysilane, p-vinylphenylmethyldimethoxysilane, vinylmethyldimethoxysilane, tetravinyltetramethylcyclosiloxane, allylmethyldimethoxysilane, y-mercaptopropylmethyldimethoxysilane, and y-methacryloxypropylmethyldimethoxysilane and the like. In terms of the mold release ability, y-mercaptopropylmethyldimethoxsilane and y-methacryloxypropylmethyldimethoxysilane are preferable among them. These compounds are hydrolyzable silicon group-containing compounds and can be distinguished from the above-mentioned alkoxysilanes by classfying the compounds having a polymerizable unsaturated bond in the molecule into the graft crosslinking agent.

The used amount of the graft crosslinking agent is preferably 0.01 to 0.4% by weight, more preferably 0.03 to 0.35% by weight, and even more preferably 0.05 to 0.3% by weight in 100% by weight as the total of the organosiloxane having cyclic structure, the alkoxysilane, and the graft crosslinking agent. If the used amount of the graft crosslinking agent is less than 0.01% by weight, it tends to be difficult to obtain the polyorganosiloxane-containing graft copolymer (C) in powder state and if the used amount of the graft crosslinking agent is high, for example, exceeding 0.4% by weight, the effect to improve the mold release ability tends to be deteriorated.

The compounds exemplified as the alkoxysilane and graft crosslinking agent are all so-called bifunctional compounds each having two hydrolyzable groups and such bifunctional compounds are preferable to be used as the above-mentioned alkoxysilane and graft crosslinking agent. Further, tri- or tetra-functional compounds having three or four hydrolyzable groups in one molecule are also usable and the tri- or tetra-functional compounds can be classified separately as a crosslinking agent but not classified as the alkoxysilane and graft crosslinking agent. Such a crosslinking agent is to be used in an amount of preferably 1% by weight or less and more preferably 0.3% by weight or less with respect to the polyorganosiloxane (A). If the crosslinking agent exceeds 1% by weight, the effect to improve the mold release ability tends to be deteriorated.

The amount of the polyorganosiloxane (A) concerning the polyorganosiloxane-containing graft copolymer (C) of the present invention is 60 to 90 parts by weight, preferably 65 to 85 parts by weight, and more preferably 70 to 85 parts by weight. If the amount of the polyorganosiloxane (A) is less than 60 parts by weight, the effect to improve the mold release ability tends to be deteriorated and on the contrary, if it exceeds 90 parts by weight, it tends to be difficult to obtain the polyorganosiloxane-containing graft copolymer (C) in powder state.

The polyorganosiloxane (A) concerning the polyorganosiloxane-containing graft copolymer (C) of the present invention is preferably to be produced by methods described in US Patent Nos. 2,891,920 and 3,294,725 etc.: that is, a method of emulsifying and dispersing an organosiloxane having cyclic structure, an alkoxysilane, and a graft crosslinking agent in water by high speed shearing using a high speed stirrer such as a homogenizer in the presence of an emulsifier such as an alkylbenzenesulfonic acid and successively carrying out emulsion polymerization; a method of emulsifying and dispersing an organosiloxane having cyclic structure and a graft crosslinking agent in water by high speed shearing using a high speed stirrer such as a homogenizer in the presence of an emulsifier such as an alkylbenzenesulfonic acid, successively carrying out emulsion polymerization, and continuously adding an alkoxysilane to the polymerization system.

The alkylbenzenesulfonic acid is preferable since it works as an emulsifier for the polyorganosiloxane and also as a polymerization initiator The emulsifier is used generally in an amount of 0.1 to 10% by weight and preferably 0.3 to 5% by weight with respect to the total amount of the organosiloxane, alkoxysilane, and graft crosslinking agent. The polymerization temperature is generally 5 to 100°C.

The vinyl monomer (B) employed in the polyorganosiloxane-containing graft copolymer (C) of the present invention is a component to be used for securing the compatibility of the polyorganosiloxane-containing graft copolymer (C) and the thermoplastic resin (D) and uniformly dispersing the polyorganosiloxane containing graft copolymer (C) in the thermoplastic resin (D).

As specific examples of the vinyl monomer (B) include (i) aromatic vinyl type monomers such as styrene, α-methylstyrene, p-methylstyrene, p-butylstyrene, chlorostyrene, and bromostyrene; (ii) cyanovinyl type monomers such as acrylonitrile and methacrylonitrile; (iii) (meth)acrylic acid ester type monomers such as methyl acrylate, ethyl acrylate, propyl acrylate, butyl acrylate, 2-ethylhexyl acrylate, glycidyl acrylate, hydroxyethyl acrylate, methyl methacrylate, ethyl methacrylate, butyl methacrylate, lauryl methacrylate, glycidyl methacrylate, and hydroxyethyl methacrylate; (iv) carboxyl group containing vinyl type monomers such as itaconic acid, (meth)acrylic acid, fumaric acid, and maleic acid; (v) maleimide type monomers such as maleimide, N-methylmaleimide, N-ethylmaleimide, N-propylmaleimide, N-butylmaleimide, N-phenylmaleimide, and N-(p-methylphenyl)maleimide. The vinyl monomer (B) may be used alone or two or more of them may be used in combination. In this invention, unless otherwise specified, (meth) acryl means acryl and / or methacryl.

The amount of the vinyl monomer (B) employed in the polyorganosiloxane-containing graft copolymer (C) of the present invention is 10 to 40 parts by weight, preferably 15 to 35 parts by weight, and more preferably 15 to 30 parts by weight. If the amount of the vinyl monomer (B) is less than 10 parts by weight, it tends to be difficult to obtain the polyorganosiloxane-containing graft copolymer (C) in powder state and on the contrary, if the amount of the vinyl monomer (B) exceeds 40 parts by weight, the effect to improve the mold release ability tends to be lowered.

With respect to the polyorganosiloxane-containing graft copolymer (C) of the present invention, the graft polymerization of the vinyl monomer (B) in the presence of the polyorganosiloxane (A) may be carried out by a common emulsion polymerization.

As a method for separating polymer from latex of the graft copolymer (C) obtained by the above-mentioned emulsion polymerization may be exemplified a method of coagulating the latex by adding, for example, (i) an alkaline earth metal salt such as calcium chloride, magnesium chloride, and magnesium sulfate; (ii) an alkali metal salt such as sodium chloride and sodium sulfate; (iii) an inorganic acid such as hydrochloric acid, sulfuric acid, and phosphoric acid; and (iv) an organic acid such as acetic acid and successively subjecting the coagulated slurry to heat treatment, and dehydrating and drying. Further, a freeze coagulation method and a spray drying method are also employed.

The thermoplastic resin (D) of the present invention is a thermoplastic resin excellent in transparency and as specific examples of the thermoplastic resin, there may be mentioned polystyrene (PS), styrene-acrylonitrile copolymer (AS), styrene-methyl methacrylate copolymer (MS), transparent ABS resin comprised of styrene-butadiene-acrylonitrile copolymer, transparent AES resin or transparent AAS resin obtained by replacing butadiene of the ABS resin with ethylene propylene rubber or polybutyl acrylate, polymethyl methacrylate, polycarbonate, polybutylene terephthalate, and polyethylene terephthalate and these resins may be used alone or two or more of them may be used in combination.

The blending amount of the above-mentioned polyorganosiloxane-containing graft copolymer (C) to the thermoplastic resin (D) is preferably 0.01 to 3% by weight of the polyorganosiloxane-containing graft copolymer (C) to 99.99 to 97% by weight of the thermoplastic resin (D) and more preferably 0.01 to 1% by weight of (C) to 99.99 to 99% by weight of (D) in terms of the mold release ability. If the blending amount of the polyorganosiloxane-containing graft copolymer (C) is less than 0.01% by weight, the effect to improve the mold release ability tends to be lowered and on the contrary, if it exceeds 3% by weight, the improvement effect tends to be saturated or the transparency tends to be deteriorated.

Mixing of the thermoplastic resin (D) and the polyorganosiloxane-containing graft copolymer (C) may be carried out by mixing them with a Henschel mixer, a ribbon blender, and a super floater and successively kneading them with a melting and kneading apparatus such as rolls, a uniaxial extruder, a biaxial extruder, or a kneader.

In this case, additives to be used commonly, that is, a pigment, a coloring agent, a heat stabilizer, an antioxidant, a plasticizer, a lubricant, a UV absorbent, a photostabilizer, and an antistatic agent and the like may be added.

A molding method of the resin composition may be molding methods which are employed generally for molding a thermoplastic resin composition, that is, an injection molding method, an extrusion molding method, a blow molding method, and a calendar molding method and the like.

### Examples

Hereinafter, the invention will be described more in detail along with Examples, however it is not intended that the invention be limited to the illustrated Examples. The evaluation methods in Examples and Comparative Examples are described collectively below.

### (Polymerization conversion ratio)

A certain amount of obtained latex was sampled and dried by a hot air dryer at 120°C for 1 hour to measure the solid content weight and the conversion ratio was calculated according to (weight of solid component in latex / weight of fed monomer in latex)x100%.

### (Volume average particle diameter)

The volume average particle diameter of the obtained polyorganosiloxane particles is measured in a latex state. The volume average particle diameter (µm) was measured by a light scattering method using MICROTRAC UPA manufactured by LEED & NORTHRUP INSTRUMENTS as a measurement apparatus.

### (Powder characteristics)

The obtained polyorganosiloxane-containing graft copolymer latex was coagulated, dehydrated and dried to give a polyorganosiloxane-containing graft copolymer in powder state, the powder state was evaluated according to the following evaluating criteria.
⓪: the powder surface did not have adheasive feeling thereby the resulting powder was in a good condition;
×: latex became bulky and no powder was obtained.

### (Mold release ability)

Each obtained pellet type resin composition was molded into an ASTM-1 dumbbell (3 mm thickness) using an injection molding apparatus (FAS-75D, manufactured by FANUC LTD.) in conditions of a cylinder temperature 240°C, a molding temperature 40°C, an injection speed 25 mm/sec, an injection time 5 sec, and cooling time 25 sec and the molded body was formed in conditions of an ejector forwarding speed 50 mm/sec and ejector forwarding position 35 mm and the state that the molded body was released from the mold by ejection of ejector pins was observed. The ejector pins were arranged at two positions to make the molded body easy to be separated from the mold. If the retention pressure is low, the molded body is easily separated from the mold by extrusion of the ejector pins. However as the retention pressure is increased more, the molded body become more difficult to be separated from the mold and finally could not be separated from the mold even if the ejection pins are extruded. The retention pressure (hereinafter, the retention pressure is referred to as "retention pressure difficult for mold release") was measured at the moment the molded body was apparently seen not separated from the mold even if the ejector pins were extruded. The retention pressures difficult for mold release of a resin composition containing the polyorganosiloxane-containing graft copolymer and a resin composition containing no polyorganosiloxane-containing graft copolymer were compared. The evaluation criterion for mold release ability was as follows.
o: the difference of the retention pressures difficult for mold release was 200 kg/cm²f or higher;
Δ: the difference of the retention pressures difficult for mold release was 50 to 200 kg/cm²f,
×: the difference of the retention pressures difficult for mold release was lower than 50 kg/cm²f.

### (Evaluation of transparency)

Each obtained pellet type resin composition was molded into a flat plate with a size of 75×50 mm (thickness 2 mm) using an injection molding apparatus (FAS-75D, manufactured by FANUC LTD.) in condition of a cylinder temperature 240°C and the turbidity was measured using a colorimeter (Σ80, manufactured by Nippon Denshoku Industries Co., Ltd.) (unit: %).

### (A) Production of polyorganosiloxane-containing graft copolymer (Production Example 1) Production of polyorganosiloxane-containing graft copolymer (C-1)

An emulsion obtained by stirring a mixture of 300 parts by weight of pure water, 69.9 parts by weight of octamethylcyclotetrasiloxane, 0.2 parts by weight of 3-methacryloxypropylmethyldimethoxysilane, and 5.0 parts by weight (solid content) of dodecylbenzenesulfonic acid sodium salt with a homomixer (M-model, manufactured by TOKUSHU KIKA KOGYO) at 7000 rpm for 5 minutes was fed at one time to a reactor equipped with a stirrer, a reflux condenser, a nitrogen blowing inlet, a monomer addition port, and a thermometer.

Successively, 1.5 parts by weight of dodecylbenzenesulfonic acid was added in form of an aqueous 10 wt.% solution and the mixture was heated to 80°C while being stirring in nitrogen current. After 1 hour from it became 80°C, 29.9 parts by weight of diphenylmethoxysilane was continuously and additionally added at a dropwise addition speed of 10 parts by weight/hour to the reactor. On completion of the dropwise addition, stirring was continued at 80°C for 8 hours and after the resulting reaction mixture was cooled to 23°C and left for 20 hours. After that, an aqueous sodium hydroxide was added to adjust the pH of the obtained latex at 6.5 and polymerization was finished to obtain polyorganosiloxane (A-1) latex. The volume average particle diameter of the polyorganosiloxane (A-1) in the obtained latex was 0.13 µm.

Successively, a reactor equipped with a stirrer, a reflux condenser, a nitrogen blowing inlet, a monomer addition port, and a thermometer was loaded with 250 parts by weight of pure water and 80 parts by weight (solid content) of the above mentioned polyorganosiloxane (A-1) latex and the mixture was heated to 60°C in nitrogen current while being stirred. After, heating to 60°C, 0.2 parts by weight of sodium formaldehydesulfoxylate, 0.01 parts by weight of disodium ethylenediaminetetraacetate, and 0.0025 parts by weight of ferrous sulfate (heptahydrate) were added and successively a mixture containing 5 parts by weight of acrylonitrile, 15 parts by weight of styrene, and 0.05 parts by weight of cumene hydroperoxide was dropwise additionally added for 3 hours and on completion of additional addition, the mixture was continuously stirred for 2 hours to obtain graft copolymer (C-1) latex. The polymerization conversion ratio was 99%.

One hundred parts by weight (solid content) of the obtained latex was mixed with 4 parts by weight of calcium chloride in form of an aqueous 5 wt.% solution to obtain a coagulated slurry. After the coagulated slurry was heated to 95°C, the slurry was dehydrated and dried to 50°C to obtain powder state polyorganosiloxane-containing graft copolymer (C-1).

### (Production Examples 2 to 6)

### Polyorganosiloxane-containing graft copolymers (C-2) to (C-6)

Powder state polyorganosiloxane-containing graft copolymers (C-2) to (C-6) were obtained in the same manner as Production Example 1, except that the composition ratios of the polyorganosiloxane (A) latex and vinyl monomer (B) were changed as shown in Table 2.

### (Production Examples 7 and 8)

### Polyorganosiloxane-containing graft copolymers (C-7) and (C-8)

Polyorganosiloxane latexes (A-4) and (A-5) were obtained in the same manner as Production Example 1, except that the graft crosslinking agent to be used at the time of polyorganosiloxane production was changed from 3-methacryloxypropylmethyldimethoxysilane to 3-mercaptopropyldimethoxymethylsilane and no alkoxysilane was used for (A-5) as shown in Table 1. Powder state polyorganosiloxane-containing graft copolymers (C-7) and (C-8) were obtained in the same manner as Production Example 1, except that the obtained polyorganosiloxane latexes (A-4) and (A-5) were used as shown in Table 2.

The polymerization compositions and volume average particle diameters of the polyorganosiloxanes (A-1) to (A-5) are shown in Table 1.

**[Table 1]**

| Polymerization composition of polyorganosiloxane (Λ) | | A-1 | A-2 | A-3 | A-4 | A-5 |
|---|---|---|---|---|---|---|
| Organosiloxane with cyclic structure | Octamethylcyclotetrasiloxane | 69.9 | 59.8 | 69.3 | 79.9 | 99.8 |
| Alkoxysilane | Diphenyldimethoxysilane | 29.9 | 39.9 | 29.7 | 20.0 | |
| Graft crosslinking agent | 3-Methacryloxypropylmethyldimethoxysilane | 0.2 | 0.3 | 1.0 | | |
| | 3-Mercaptopropyldimethoxymethylsilane | | | | 0.1 | 0.2 |
| Sodium dodecylbenzenesulfonate | | 5 | 5 | 5 | 5 | 5 |
| Volume average particle diameter (µm) | | 0.13 | 0.14 | 0.13 | 0.13 | 0.09 |

The monomer compositions, polymerization conversion ratios, and the powder characteristics (state) of the polyorganosiloxane-containing graft copolymers (C-1) to (C-8) are shown in Table 2.

**[Table 2]**

| Polymerization composition of graft copolymer (C) | | C-1 | C-2 | C-3 | C-4 | C-5 | C-6 | C-7 | C-8 |
|---|---|---|---|---|---|---|---|---|---|
| (A) | Polyorganosiloxane (A-1) | 80 | 70 | 91. | 50 | | | | |
| | Polyorganosiloxane (A-2) | | | | | 85 | | | |
| | Polyorganosiloxane (A-3) | | | | | | 85 | | |
| | Polyorganosiloxane (A-4) | | | | | | | 80 | |
| | Polyorganosiloxane (A-5) | | | | | | | | 80 |
| (B) | Acrylonitrile | 5 | 7.5 | 2.3 | 12.5 | 4 | 4 | 5 | 5 |
| | Styrene | 15 | 22.5 | 6.7 | 37.5 | 11 | 11 | 15 | 15 |
| | Cumene hydroperoxide | 0.05 | 0.06 | 0.01 | 0.1 | 0.03 | 0.03 | 0.05 | 0.05 |
| Polymerization conversion (%) | | 99 | 98 | 98 | 98 | 99 | 99 | 98 | 99 |
| Powder characteristics | | ⓪ | ⓪ | × | ⓪ | ⓪ | ⓪ | ⓪ | ⓪ |

### (Example 1)

As a thermoplastic resin (D), 99.95 parts by weight of styrene-methyl methacrylate copolymer (Estyrene MS MS-600, manufactured by Nippon Steel Chemical Co., Ltd.) and 0.05 parts by weight of the polyorganosiloxane-containing graft copolymer (C-1) were mixed and blended by stirring for 5 minutes with a Henschel mixer (SMV-20, manufactured by Kawata Co., Ltd.). Further, using a bent type monoaxial extruder (HV-40-28, manufactured by Tabata Co., Ltd.), the mixture was melted and kneaded at a cylinder set temperature of 230°C to obtain pellets of the resin composition. The obtained pellets were injection-molded into ASTM-1 dumbbell (3 mm thickness) using an injection molding apparatus (FAS-75D, manufactured by FANUC LTD.) and subjected to the mold release ability evaluation. The evaluation results are shown in Table 3.

### (Examples 2 to 4)

Pellets were produced in the same manner as Example 1, except that the composition ratios of the polyorganosiloxane-containing graft copolymers and the thermoplastic resins were changed as shown in Table 3 and after that, the pellets were injection-molded and subjected to the mold release ability evaluation. The evaluation results are shown in Table 3.

### (Comparative Examples 1 to 4)

Pellets were produced in the same manner as Example 1, except that the composition ratios of the polyorganosiloxane-containing graft copolymers and the thermoplastic resins were changed as shown in Table 3 and after that, the pellets were injection-molded and subjected to the mold release ability evaluation. The evaluation results are shown in Table 3.

With respect to Comparative Example 4, as shown in Table 2, the powder characteristics of the polyorganosiloxane-containing graft copolymer (C-3) were inferior and the mold release ability and transparency were not evaluated.

### (Comparative Example 5)

Pellets were produced in the same manner as Example 1, as shown in Table 3, except that dimethylsilicone oil (SH200 (viscosity 10000cSt); manufactured by Dow Corning Toray Silicone Co., Ltd.) was used in place of the polyorganosiloxane-containing graft copolymer (C-1) and after that, the pellets were injection-molded and subjected to the mold release ability evaluation. The evaluation results are shown in Table 3.

**[Table 3]**

| | | | Example | | | | Comparative Example | | | | |
|---|---|---|---|---|---|---|---|---|---|---|---|
| | | | 1 | 2 | 3 | 4 | 1 | 2 | 3 | 4 | 5 |
| Resin composition | Thermoplastic resin | D | 99.95 | 99.7 | 99.95 | 99.9 | 99.7 | 99.95 | 99.96 | 99.9 | 99.95 |
| | Polyorganosiloxane-containing graft copolymer | C-1 | 0.05 | | | | | | | | |
| | | C-2 | | 0.3 | | | | | | | |
| | | C-3 | | | | | | | | - | |
| | | C-4 | | | | | 0.3 | | | | |
| | | C-5 | | | 0.05 | | | | | | |
| | | C-6 | | | | | | 0.05 | | | |
| | | C-7 | | | | 0.1 | | | | | |
| | | C-8 | | | | | | | 0.05 | | |
| | Dimethylsilicone oil | SH200 | | | | | | | | | 0.05 |
| Mold release ability | | | O | O | O | O | Δ | × | O | - | O |
| Transparency (%) | | | 0.9 | 1.5 | 0.9 | 1.0 | 6.1 | 4.2 | 3.9 | - | 18.4 |

### INDUSTRIAL APPLICABILITY

A resin composition obtained by adding a small amount of a polyorganosiloxane-containing graft copolymer with a specified composition of the present invention to a thermoplastic resin is advantageously usable for housings and components of office automation equipments such as game machines, telephones, cellular phones, notebook personal computers, desktop personal computers, printers, copying machines, facsimiles, and projectors; housings and components of domestic electric appliances such as televisions, refrigerators, room air conditioners, laundry machines, vacuum cleaners, lighting equipments, microwaves, fans, and ventilation fans; automotive interior parts such as meter panels and control switch panels; automotive exterior parts such as lamp housings and cowls for bicycles; and daily goods such as shower parts, pump parts, building material and housing parts, containers, stationery (ball-point pens and marker pens), pachinko, and toys.

## Claims

1. A thermoplastic resin composition excellent in transparency and mold release ability comprising 0.01 to 3 % by weight of a polyorganosiloxane-containing graft copolymer (C) and 99.99 to 97 % by weight of a thermoplastic resin (D), wherein
the polyorganosiloxane-containing graft copolymer (C) is obtainable by polymerizing 40 to 10 parts by weight of a vinyl monomer (B) in the presence of 60 to 90 parts by weight of a polyorganosiloxane (A) with a proviso that a sum of (A) and (B) is 100 parts by weight,
the polyorganosiloxane (A) is obtainable by polymerizing 99.99 to 99.6 parts by weight of a sum of an organosiloxane having cyclic structure and an alkoxysilane with 0.01 to 0.4 % by weight of a graft crosslinking agent, and
a weight ratio of the organosiloxane having cyclic structure to the alkoxysilane is 1/9 to 9/1.

2. The thermoplastic resin composition according to claim 1, wherein the vinyl monomer (B) is at least one selected from the group consisting of an aromatic vinyl monomer, a vinyl monomer cyanide, a (meth)acrylic acid ester monomer, a carboxyl-group containing vinyl monomer, and a maleimide monomer.
